# EUROPEAN PATENT APPLICATION

(11) **EP 4 349 642 A1**
(43) Date of publication of application: **10.04.2024**
(21) Application number: 22832079.2
(22) Date of filing: 29.06.2022
(51) Int. Cl.: B60L 53/66

(54) **VEHICLE TASK MANAGEMENT METHOD, SYSTEM, AND APPARATUS**

(30) Priority: 30.06.2021 CN 202110736894; 23.11.2021 CN 202111390352
(71) Applicant: Huawei Technologies Co., Ltd., Longgang Shenzhen, Guangdong 518129 (CN)
(72) Inventor: ZHANG, Jing, Shenzhen, Guangdong 518129 (CN)
(74) Representative: Gill Jennings & Every LLP
(86) International application number: PCT/CN2022/102116
(87) International publication number: WO 2023/274266

(57) **Abstract**

This application provides a vehicle task management method, system, and apparatus, and relates to an autonomous driving system. The method includes: receiving first status information, where the first status information is associated with at least one first vehicle; determining second status information from the first status information, where the second status information is associated with a first task; determining a second vehicle based on the second status information; and sending indication information to the second vehicle, where the indication information indicates the second vehicle to execute the first task. In this way, the second vehicle (namely, a target vehicle) for executing the first task is determined based on the first status information associated with the at least one first vehicle and the status information associated with the first task, so that appropriate vehicle task allocation can be effectively implemented. This reduces vehicle task conflicts as much as possible, and resolves a problem of disordered vehicle task allocation, so that vehicle tasks can be carried out smoothly.

## Description

This application claims priority to Chinese Patent Application No. 202110736894.0, filed with the China National Intellectual Property Administration on June 30, 2021 and entitled "VEHICLE TASK MANAGEMENT METHOD, SYSTEM, AND APPARATUS", and claims priority to Chinese Patent Application No. 202111390352.9, filed with the China National Intellectual Property Administration on November 23, 2021 and entitled "VEHICLE TASK MANAGEMENT METHOD, SYSTEM, AND APPARATUS", which are incorporated herein by reference in their entireties.

### TECHNICAL FIELD

This application relates to the field of autonomous driving technologies, and in particular, to a vehicle task management method, system, and apparatus.

### BACKGROUND

As autonomous driving technologies and Internet of Vehicles technologies develop, functions of a vehicle are increasingly enhanced. A plurality of vehicles may cooperate to complete a work task. The work task may include a plurality of subtasks. Appropriately allocating each subtask to a target vehicle is a key to completing vehicle tasks. However, one vehicle may simultaneously receive a plurality of tasks, which causes a task conflict. As a result, the tasks executed by the vehicle fail.

Therefore, how to appropriately allocate vehicle tasks to ensure smooth progress of the vehicle tasks is an urgent technical problem to be resolved.

### SUMMARY

This application provides a vehicle task management method and apparatus, to appropriately allocate vehicle tasks. This improves a vehicle task completion rate.

According to a first aspect, an embodiment of this application provides a vehicle task management method. The method includes: receiving first status information, where the first status information is associated with at least one first vehicle; determining second status information from the first status information, where the second status information is associated with a first task; determining a second vehicle based on the second status information; and sending indication information to the second vehicle, where the indication information indicates the second vehicle to execute the first task.

It should be noted: The "first status information" in this embodiment of this application may be understood as status information of one or more vehicles, and status information of each vehicle includes a status parameter. The "second status information" may be understood as status information required by a target vehicle that executes the first task. The "second vehicle" may be one or more target vehicles that meet the second status information. The "first task" may be a task, or may be a set of subtasks of a task. This is not limited in embodiments of this application.

In this embodiment of this application, the second vehicle for executing the first task is selected based on the status information associated with the first task, to effectively implement appropriate vehicle task allocation, reduce disordered vehicle task allocation, effectively improve task allocation efficiency, and further effectively improve task execution efficiency of the vehicle.

In a possible design, the first status information or the second status information includes at least one of the following: an online state, a healthy state, a task-receivable state, a travelable state, a charging state, a charging-task state, a remote control state, and a visible state of a vehicle.

It should be noted: The "online state" in this embodiment of this application may be understood as a communication connection status between the vehicle and a server. The "healthy state" may be understood as whether the vehicle is faulty. The "task-receivable state" may be understood as that the vehicle currently does not have a task being executed, and can normally receive a task. The "charging state" may be understood as a currently charging condition of the vehicle. The "charging-task state" may be understood as whether the vehicle currently has a charging task. The "remote control state" may be understood as a manual control state in which the vehicle can only receive an instruction from an operator. The "visible state" may be understood as that the vehicle displays an offline state to a third-party server. In this case, the vehicle cannot receive a task from the third-party server.

In this design, a plurality of types of status information of the vehicle are comprehensively considered, so that the target vehicle that is determined based on the status information of the vehicle and that is for executing the first task better meets a task requirement of the first task, and further, task allocation is more appropriate.

In a possible design, the first task is determined based on a first resource required by the first vehicle and availability of the first resource. The first resource includes at least one of the following: a charging pile location, a maintenance location, a parking location, and a work location.

The "charging pile location" may be understood as a charging pile resource corresponding to the location. The "maintenance location" may be understood as a maintenance device and a diagnosis device corresponding to the location. The "parking location" may be understood as parking space corresponding to the location. The "work location" may be understood as a work area and a tool corresponding to the location. For example, the first resource may be a charging pile location, a maintenance location, a parking location, and a work location. For another example, the first resource may be a charging pile location and a parking location, or may be a maintenance location and a parking location, or may be a work location and a parking location. For another example, the first resource may be a charging pile location, a maintenance location, and a parking location.

In this design, the first task is determined based on the first resource required by the first vehicle and the availability of the first resource, so that the server can automatically trigger a task based on a requirement of the first vehicle. In this way, normal running of the vehicle can be ensured, and subsequently, the vehicle can normally execute another task.

In a possible design, the first task is a task input from a third party or a task reported by the second vehicle. The third party may be understood as the third-party server (namely, a third-party system).

In this design, the first task has a plurality of sources, and may be input from the third party, or may be a task actively reported by the vehicle based on a requirement of the vehicle. In this way, management of vehicle tasks of a plurality of systems is implemented, and disordered management of the vehicle tasks is effectively reduced.

In a possible design, the first task is a charging task, a parking task, or a work task.

In this design, allocation management of a plurality of types of tasks can be implemented, so that management of vehicle tasks can effectively meet diversified task management requirements of a user.

In a possible design, before the sending indication information to the second vehicle, it further needs to be determined that the second vehicle is in an available state. It should be noted that the "available state" in this embodiment of this application has different states for different types of tasks. For example, when the first task is a work task, the available state is specifically: an online state, a healthy state, a task-receivable state, a travelable state, an uncharged state, and a non-remote control state. For another example, when the first task is a charging task or a parking task, the available state is specifically an online state, a healthy state, a task-receivable state, a travelable state, an uncharged state, a non-remote control state, and a charging-task state.

In this design, the indication information is sent to the second vehicle only after it is determined that the second vehicle meets the available state required by the first task. This effectively ensures accurate execution of a vehicle task.

In a possible design, the method further includes: receiving reported information, where the reported information is information reported after the second vehicle completes execution of the first task.

In this design, the server may further receive the reported information from the vehicle, and further determine, based on the reported information, that the second vehicle has executed the first task, so that the server may correspondingly adjust a vehicle status and continue to allocate subsequent tasks.

According to a second aspect, an embodiment of this application provides a vehicle task management method. The method may be applied to a second vehicle in at least one first vehicle. The at least one first vehicle is associated with first status information, the second vehicle is associated with second status information, and the second status information is associated with a first task. The method includes: sending the first status information to a server, so that the server determines the second status information from the first status information; receiving indication information from the server, where the indication information indicates the second vehicle to execute the first task; and executing the first task based on the indication information.

In a possible design, the first status information or the second status information includes at least one of the following:
an online state, a healthy state, a task-receivable state, a travelable state, a charging state, a remote control state, a charging-task state, and a visible state of a vehicle.

In a possible design, the first task is determined based on a first resource required by the first vehicle and availability of the first resource. The first resource includes at least one of the following: a charging pile location, a maintenance location, a parking location, and a work location.

In a possible design, the first task is a task input from a third party or a task reported by the second vehicle.

In a possible design, the first task is a charging task, a parking task, or a work task.

In a possible design, the second vehicle may further send reported information to the server, wherein the reported information is information reported after the second vehicle completes execution of the first task.

According to a third aspect, an embodiment of this application further provides a vehicle task management system. In an example, the system includes:
a server, configured to: receive first status information, where the first status information is associated with at least one first vehicle, determine second status information from the first status information, where the second status information is associated with a first task, determine a second vehicle based on the second status information, and send indication information to the second vehicle, where the indication information indicates the second vehicle to execute the first task; and
the second vehicle, configured to: send the first status information to the server, receive the indication information, and execute the first task based on the indication information.

In a possible design, the system further includes a third-party server. The third-party server may be configured to send the first task to the server. Further, the server may be configured to receive the first task.

According to a fourth aspect, an embodiment of this application further provides a method for determining a visible state of a vehicle. The method may be applied to a server or a vehicle, and the method includes: obtaining first information, where the first information includes at least one of the following: a charging state, a healthy state of a vehicle, and predicted work efficiency of executing a first task by the vehicle; and determining, based on the first information, whether the vehicle is in a visible state. The visible state indicates that the vehicle is in an offline state for a third-party server. In this case, the vehicle cannot receive a task from the third party.

Example 1: When the first information includes a charging state of the vehicle, the determining, based on the first information, whether the vehicle is in a visible state may be specifically that: if it is determined that the vehicle is in the charging state, it is determined that the vehicle is in an invisible state; or if it is determined that the vehicle is in an uncharged state, it is determined that the vehicle is in the visible state.

Example 2: When the first information includes a charging state and a healthy state of the vehicle, the determining, based on the first information, whether the vehicle is in a visible state may be specifically that: if it is determined that the vehicle is in the healthy state and the charging state, it is determined that the vehicle is in an invisible state; if it is determined that the vehicle is in an uncharged state but is in an unhealthy state, it is determined that the vehicle is in an invisible state; or if it is determined that the vehicle is in an uncharged state and is in the healthy state, it is determined that the vehicle is in the visible state.

Example 3: The first information includes a charging state and a healthy state of the vehicle, and predicted work efficiency of executing the first task by the vehicle. The determining, based on the first information, whether the vehicle is in a visible state may be specifically that: if it is determined that the vehicle is in the healthy state and an uncharged state, but the predicted work efficiency of executing the first task by the vehicle is lower than a preset value, it is determined that the vehicle is in an invisible state; or if it is determined that the vehicle is in the healthy state and an uncharged state, and the predicted work efficiency of executing the first task by the vehicle is greater than a preset value, it is determined that the vehicle is in the visible state.

In an embodiment of this application, whether the vehicle is in the visible state is determined based on status information of the vehicle and or the predicted work efficiency of executing the first task by the vehicle, and then whether the vehicle receives a task of the third party is determined, so that vehicle task allocation is more appropriate, and a case in which task execution fails due to a task conflict of the vehicle is effectively reduced.

According to a fifth aspect, an embodiment of this application provides a vehicle task management apparatus. For example, the apparatus may include:
a transceiver module, configured to receive first status information, where the first status information is associated with at least one first vehicle; and
a processing module, configured to: determine second status information from the first status information, where the second status information is associated with a first task, and determine a second vehicle from the at least one first vehicle based on the second status information.
The transceiver module is further configured to send indication information to the second vehicle, where the indication information indicates the second vehicle to execute the first task.

In addition, for another optional implementation of a communication apparatus in this aspect, refer to the related content of the first aspect. Details are not described herein again.

According to a sixth aspect, an embodiment of this application provides a vehicle task management apparatus. For example, the apparatus includes:
a transceiver module, configured to: send first status information to a server, so that the server determines second status information from the first status information, and receive indication information from the server, where the indication information indicates a second vehicle to execute a first task; and
a processing module, configured to execute the first task based on the indication information.

In addition, for another optional implementation of a communication apparatus in this aspect, refer to the related content of the second aspect. Details are not described herein again.

According to a seventh aspect, an embodiment of this application provides a server, where the server includes a processor, and the processor is configured to perform the method according to any one of the first aspect or the possible designs of the first aspect.

In a possible design, the server is a single server or a server cluster including a plurality of sub-servers. When the server is the server cluster including the plurality of sub-servers, the plurality of sub-servers jointly perform the method according to any one of the first aspect or the possible designs of the first aspect.

According to an eighth aspect, an embodiment of this application provides a vehicle. The vehicle may include a processor. The processor is configured to perform the method according to any one of the second aspect or the possible designs of the second aspect.

According to a ninth aspect, an embodiment of this application provides a chip system. The chip system includes at least one processor. When program instructions are executed in the at least one processor, the method according to any one of the first aspect, the second aspect, or the fourth aspect, and the optional design of the first aspect, the second aspect, or the fourth aspect is enabled to be implemented.

In a possible design, the chip system further includes a communication interface. The communication interface is configured to input or output information.

In a possible design, the chip system further includes a memory. The memory is coupled to the processor through the communication interface, and is configured to store the foregoing instructions, so that the processor reads, through the communication interface, the instructions stored in the memory.

In a possible design, the processor may be a processing circuit. This is not limited in this application.

According to a tenth aspect, an embodiment of this application further provides a computer program product including instructions. When the computer program product runs on the foregoing apparatus, the vehicle task management method according to the first aspect or any possible design of the first aspect and the second aspect or any possible design of the second aspect is performed, or the method for determining a visible state of a vehicle according to the fourth aspect or any possible design of the fourth aspect is performed.

According to an eleventh aspect, an embodiment of this application provides a computer-readable storage medium, where the computer-readable storage medium stores a computer program, and when the computer program is run, the vehicle task management method according to the first aspect or any possible design of the first aspect and the second aspect or any possible design of the second aspect is implemented, or the method for determining a visible state of a vehicle according to the fourth aspect or any possible design of the fourth aspect is implemented.

For details of beneficial effects of the second aspect, the third aspect, and the fifth aspect to the eleventh aspect, refer to technical effects that can be achieved by corresponding designs in the first aspect. Details are not described herein again.

### BRIEF DESCRIPTION OF DRAWINGS

FIG. 1 is a schematic diagram of an architecture of a vehicle task management system to which an embodiment of this application is applicable;
FIG. 2 is a schematic diagram of a structure of a server to which an embodiment of this application is applicable;
FIG. 3 is a schematic flowchart of a vehicle task management method according to an embodiment of this application;
FIG. 4 is a schematic flowchart of a method for determining a visible state of a vehicle according to an embodiment of this application;
FIG. 5 is a schematic flowchart of a vehicle task determining method according to an embodiment of this application;
FIG. 6 is a schematic flowchart of another vehicle task determining method according to an embodiment of this application;
FIG. 7 is a schematic flowchart of another vehicle task determining method according to an embodiment of this application;
FIG. 8 is a schematic diagram of a structure of a vehicle task management apparatus according to an embodiment of this application;
FIG. 9 is a schematic diagram of a structure of another vehicle task management apparatus according to an embodiment of this application; and
FIG. 10 is a schematic diagram of a structure of a chip system according to an embodiment of this application.

### DESCRIPTION OF EMBODIMENTS

To make objectives, technical solutions, and advantages of embodiments of this application clearer, the following describes embodiments of this application in detail with reference to the accompanying drawings.

First, some terms in embodiments of this application are explained and described, to facilitate understanding of a person skilled in the art.
1) First status information may be understood as status information of at least one first vehicle, and status information of each first vehicle includes one or more status parameters (for example, an online state and a healthy state).
2) Second status information may be understood as status information of a second vehicle. The second vehicle may be one or more target vehicles, and status information of each target vehicle meets a vehicle status that needs to be met for executing a first task.
3) An available state may be understood as a vehicle status required by a target vehicle that executes a first task, and is associated with second status information, that is, all status information of the second vehicle corresponding to the second status information meets a status information requirement corresponding to the available state.
4) In embodiments of this application, "at least one" means one or more. At least one of the following items (pieces) or a similar expression thereof refers to any combination of these items, including any combination of singular items (pieces) or plural items (pieces). For example, at least one (one piece) of a, b, or c may represent: a, b, c, a and b, a and c, b and c, or a, b, and c, where a, b, and c may be singular or plural.

Ordinal numerals such as "first" and "second" in embodiments of this application are used to distinguish between a plurality of objects, and are not intended to limit sizes, shapes, a sequence, a time sequence, priorities, or importance degrees of the plurality of objects. For example, the first status information and the second status information are merely used to distinguish different status information, but do not indicate different priorities, importance degrees, or the like of the two pieces of status information.

This application provides a vehicle task management method. In the method, a server may receive first status information, and determine second status information from the first status information. The first status information is associated with at least one first vehicle, and the second status information is associated with a first task. Further, the server may determine, from the at least one vehicle based on the second status information, a second vehicle for executing the first task, and send indication information to the second vehicle, so that the second vehicle executes the first task. In this way, the server determines, based on the first status information associated with the at least one first vehicle and the status information associated with the first task, the second vehicle (namely, one or more target vehicles) for executing the first task. This can effectively implement appropriate vehicle task allocation, and effectively reduce a vehicle task conflict, so that vehicle tasks can be carried out smoothly.

Before the technical solutions provided in embodiments of this application are described in detail, a system architecture to which embodiments of this application are applicable is first described.

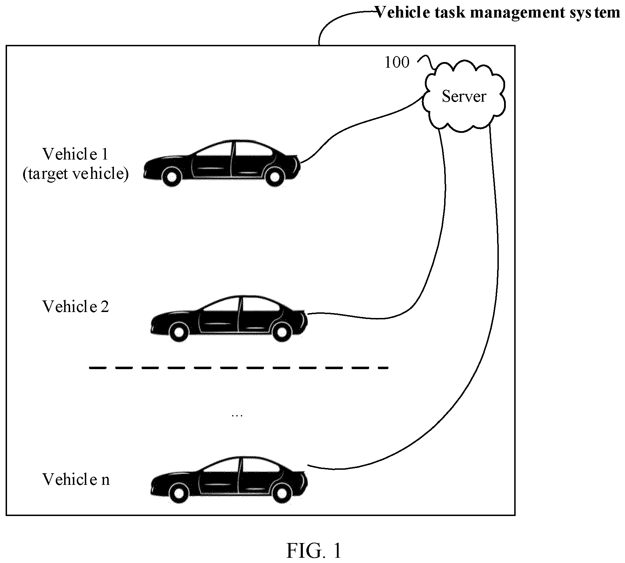

FIG. 1 is a schematic diagram of an architecture of a vehicle task management system according to an embodiment of this application. As shown in FIG. 1, the vehicle task management system provided in this embodiment of this application includes at least one first vehicle and a server 100. In FIG. 1, the at least one first vehicle is shown as n vehicles that are a vehicle 1, a vehicle 2, ..., and a vehicle n, where n is an integer greater than or equal to 3.

The vehicle 1, the vehicle 2, ..., and the vehicle n all may report status information (that is, one or more status parameters such as an online state, a healthy state, a task-receivable state, a travelable state, and the like of the vehicle) of the vehicle 1, the vehicle 2, ..., and the vehicle n to the server 100. Further, the server 100 may determine second status information from the received status information reported by the vehicles 1 to n, and determine a second vehicle (namely, one or more target vehicles) from at least one first vehicle based on the second status information. The second status information is associated with a first task, and then the server 100 may indicate information to the second vehicle, so that the second vehicle executes the first task.

For example, the vehicle 1, the vehicle 2, and the vehicle 3 report status information of the vehicle 1, the vehicle 2, and the vehicle 3 to the server 100. The server 100 matches the status information of the vehicle 1, the vehicle 2, and the vehicle 3 with status information corresponding to an available state associated with the first task, selects, from the status information, the second status information that meets the available state, and determine the second status information as status information of the vehicle 1 and the vehicle 2. In this case, the server 100 determines the vehicle 1 and the vehicle 2 as the second vehicle, and sends the indication information to the vehicle 1 and the vehicle 2, so that the vehicle 1 and the vehicle 2 execute the first task.

It should be noted that the server 100 may be a single server or a server cluster including a plurality of sub-servers, which is not specifically limited herein. The server may be a local server. In the Internet of Vehicles field, the server may be specifically a cloud server, and may also be referred to as a cloud, a cloud server, a cloud controller, an Internet of Vehicles server, or the like. The cloud server is a general term for devices or components that have a data processing capability. For example, the cloud server may include an entity device like a host or a processor, or may include a virtual device like a virtual machine or a container, or may include a chip or an integrated circuit.

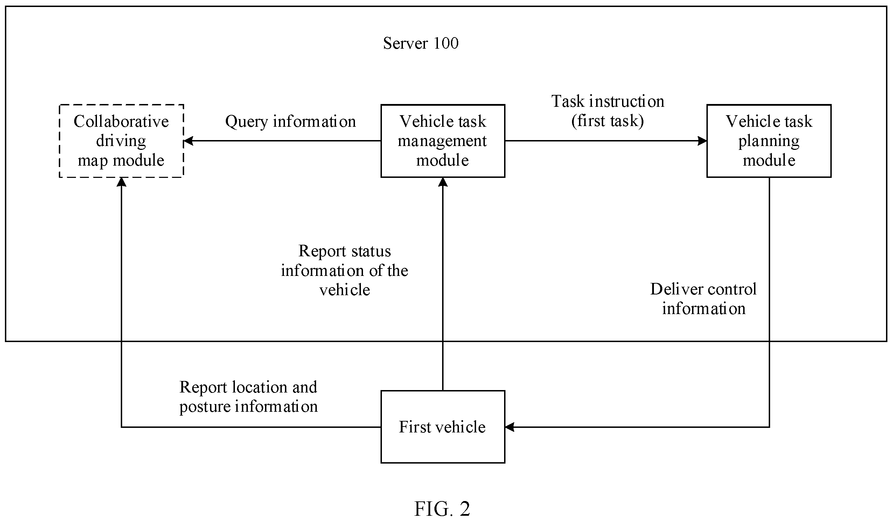

For example, refer to FIG. 2. In FIG. 2, when the server 100 includes a plurality of sub-servers, the server 100 may include a plurality of modules, for example, a vehicle task management module and a vehicle task planning module.

The vehicle task management module may be configured to: receive status information reported by at least one first vehicle (one first vehicle is used as an example in FIG. 2), determine a first task based on the status information, and send a task instruction to the vehicle task planning module, where the task instruction carries the first task. The vehicle task planning module may be configured to: receive the task instruction, determine control information corresponding to the first task, and send the control information (for example, path navigation information or work information) to a first vehicle, so that the first vehicle executes the first task.

Optionally, the server 100 may further include a collaborative driving map module. The collaborative driving map module may be configured to: receive location and posture information reported by the first vehicle, and receive map query information (for example, query whether an obstacle exists in a driving area corresponding to the first vehicle) from the vehicle task management module.

During actual application, the server 100 may further include more functional modules, or some module functions may be deployed in another server or another system. This is not limited in embodiments of this application.

The following describes in detail a vehicle task management method provided in an embodiment of this application with reference to the accompanying drawings.

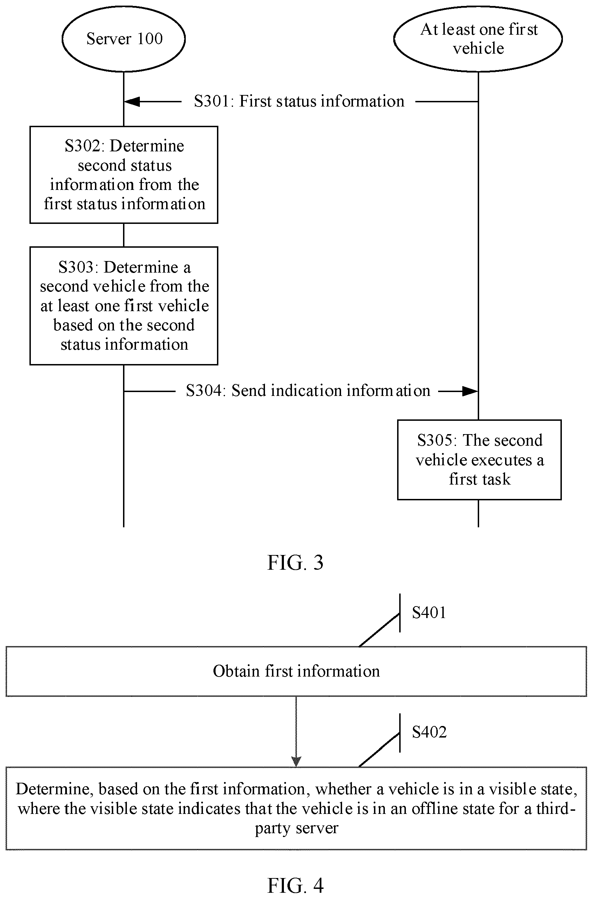

Refer to FIG. 3. FIG. 3 is a schematic flowchart of a vehicle task management method according to an embodiment of this application. The method may be applied to the vehicle task management system shown in FIG. 1. The method includes the following steps.

S301: At least one first vehicle reports first status information, and a server 100 receives the first status information.

In this embodiment of this application, the "first status information" may be understood as status information of one or more vehicles, and status information of each vehicle may include one or more status parameters (for example, an online state, a healthy state, a task-receivable state, a travelable state, and the like of a vehicle). For example, as shown in Table 1, the first status information may correspond to status information of a vehicle 1. Alternatively, as shown in Table 2, second status information corresponds to status information of a vehicle 2, status information of a vehicle 3, and status information of a vehicle 4.

**Table 1**

| | |
|---|---|
| First status information | Status information of a vehicle 1 (a status parameter 1, a status parameter 2, a status parameter 3, ..., and a status parameter n) |

**Table 2**

| | |
|---|---|
| First status information | Status information of a vehicle 2 (a status parameter 1, a status parameter 2, a status parameter 3, ..., and a status parameter n) |
| | Status information of a vehicle 3 (a status parameter 1, a status parameter 2, a status parameter 3, ..., and a status parameter n) |
| | Status information of a vehicle 4 (a status parameter 1, a status parameter 2, a status parameter 3, ..., and a status parameter n) |

In a possible implementation, the status parameter in the first status information may include at least one of the following: an online state, a healthy state, a task-receivable state, a travelable state, a charging state, a remote control state, a charging-task state, and a visible state of the vehicle. For example, the status parameter in the first status information may be an online state of the vehicle. For another example, the status parameter in the first status information may be an online state and a healthy state of the vehicle. For another example, the status parameter in the first status information may be an online state, a healthy state, or a task-receivable state of the vehicle. For another example, the status parameter in the first status information may be an online state, a healthy state, a task-receivable state, a travelable state, a charging state, a remote control state, a charging-task state, and a visible state of the vehicle. In this way, a plurality of types of status information of the first vehicle is comprehensively considered, so that a target vehicle that is determined based on the status information of the vehicle and that is configured to execute a first task better meets a task requirement of the first task, and further, task allocation is more appropriate.

For ease of understanding, the following describes in detail possible status parameters in the first status information.

### 1. Online state (online)

In this embodiment of this application, the "online state" may be understood as a communication connection status between the first vehicle and the server 100. Correspondingly, the communication connection status includes an online state and an offline state. When the first vehicle is in an online state, information exchange may be performed between the first vehicle and the server 100. For example, the first vehicle reports vehicle status information of the first vehicle. For another example, the first vehicle receives indication information from the server 100. When the first vehicle is in an offline state, the first vehicle cannot communicate with the server 100, and cannot receive indication information from the server 100.

In a possible implementation, the first vehicle may send a heartbeat packet to the server 100, and the server 100 may determine, based on the heartbeat packet, whether the first vehicle is in an online state. For example, if a heartbeat packet of the first vehicle is not received within one minute, it is determined that the first vehicle is in an offline state. For example, if a heartbeat packet of the first vehicle can be received every one minute within 30 minutes, it is determined that the first vehicle is in an online state within the 30 minutes.

In another possible implementation, the server 100 may send a heartbeat packet to the first vehicle, and then the first vehicle may determine, based on the heartbeat packet, whether the first vehicle is in an online state.

### 2. Healthy state (healthy)

In this embodiment of this application, the "healthy state" may be understood as representing that the first vehicle does not have a fault. Correspondingly, when the first vehicle has a fault, the first vehicle is in a fault state. When the first vehicle is in the fault state, the first vehicle cannot execute a task, and consequently, task execution fails. When the first vehicle is in the healthy state, the first vehicle may accurately execute a task based on control information corresponding to the first task. It should be understood that the fault state may be caused by a fault of an internal component (for example, an electronic control unit) in the first vehicle, or may be caused by an environmental factor (for example, weather or an obstacle on a road surface). This is not specifically limited in embodiments of this application.

In a possible implementation, the first vehicle may report, to the server 100 in real time, behavior performed by the first vehicle, so that the server 100 may match the behavior performed by the first vehicle with behavior that is of the first vehicle and that corresponds to the control information of the first task. If a matching degree is less than a preset threshold, it is determined that the first vehicle is in a fault state. If the matching degree is greater than the preset threshold, the first vehicle is adjusted to a healthy state.

In another possible implementation, if the first vehicle detects that an electronic control unit that executes the first task is faulty, the first vehicle is adjusted from a healthy state to a faulty state.

Optionally, before adjusting the first vehicle from a faulty state to a healthy state, the server 100 further needs to receive a confirmation instruction from an operator. This can effectively reduce a faulty operation, and reduce a situation in which vehicle task allocation is disordered due to a state setting error.

### 3. Task-receivable state (available)

In this embodiment of this application, the "task-receivable state" is used to represent a state in which the first vehicle can receive a task. Correspondingly, the task-receivable state includes the task-receivable state and a task-unreceivable state. When the first vehicle is in the task-receivable state, the first vehicle may receive a task delivered by the server 100. When the first vehicle is in the task-unreceivable state, it indicates that the first vehicle is executing a task and cannot receive another task. For example, when the first vehicle executes a work task, the first vehicle needs to be fixed in a specific work area, and cannot receive another task.

In a possible implementation, if the first vehicle detects that the first vehicle is executing a task, a task-receivable state of the first vehicle is adjusted to a task-unreceivable state. When the first vehicle detects that the task executed by the first vehicle is completed, the task-receivable state of the first vehicle is adjusted to the task-receivable state.

### 4. Travelable state (travelable)

In this embodiment of this application, the "travelable state" is used to represent that the first vehicle is in a physically travelable state without being affected by an environmental factor (for example, weather or an obstacle on a road surface). Correspondingly, if the first vehicle is unable to travel due to an environmental factor (for example, weather or an obstacle on a road surface), the vehicle is in an untravelable state.

In a possible implementation, the server 100 may determine whether the first vehicle is in a travelable state by determining whether an obstacle exists in a driving area corresponding to the first task. If the obstacle exists, it is determined that the first vehicle is in an untravelable state. If no obstacle exists, it is determined that the first vehicle is in a travelable state. The server 100 may determine, based on map information reported by the first vehicle, whether an obstacle exists in the driving area corresponding to the first task.

In a possible implementation, the server 100 may determine, by determining weather information of the driving area corresponding to the first task, whether the first vehicle is in a travelable state. If current weather information does not meet a work condition corresponding to the first task, it is determined that the first vehicle is in an untravelable state. If the current weather information meets the work condition corresponding to the first task, it is determined that the first vehicle is in a travelable state.

### 5. Charging state (charging)

In this embodiment of this application, the "charging state" is used to represent that the first vehicle is in a charging state. Correspondingly, if the first vehicle is not currently charged, the first vehicle is in an uncharged state.

In a possible implementation, the server 100 may detect a charging state of the first vehicle in real time, and when detecting that charging of the first vehicle is completed and a charging connector is separated from the first vehicle, the server 100 adjusts a state of the first vehicle to an uncharged state.

### 6. Remote control state (manual)

In this embodiment of this application, the "remote control state" may be understood as a manual control state. In this case, the first vehicle can receive only an instruction from an operator, and cannot receive a task instruction delivered by the server 100. Correspondingly, in a non-remote control state, the first vehicle may receive a task instruction from the server 100. In a possible implementation, if the first vehicle detects an instruction used to cancel a remote control state, the remote control state is adjusted to a non-remote control state.

### 7. Charging-task state (precharging)

In this embodiment of this application, the "charging-task state" is used to represent that the first vehicle has a charging task. Correspondingly, when the first vehicle does not have a charging task, the first vehicle is in a non-charging-task state. The charging-task state indicates that the first vehicle already has a charging task. In this case, the first vehicle cannot receive a first charging task. The non-charging-task state indicates that the first vehicle does not have a charging task. In this case, the first vehicle may receive a charging task.

### 8. Visible state (externally visible)

In this embodiment of this application, the "visible state" may be understood as that the first vehicle displays an online state to a third party. In this case, the first vehicle cannot receive a task from the third party. The "third party" may be understood as a third-party server 100 other than the server 100 and the first vehicle. Correspondingly, when the first vehicle is in an invisible state, the first vehicle displays an online state to the third party. In this case, the first vehicle can receive a task from the third party.

The visible state is used to represent whether the first vehicle can receive a task from the third-party server 100.

It should be understood that, during actual application, the first status information may further include other more status parameters. The foregoing is merely an example for description, but is not a limitation.

S302. Determine second status information from the first status information.

In this embodiment of this application, the "second status information" may be understood as status information of a second vehicle (namely, one or more target vehicles) that executes the first task. As shown in Table 3, when the second vehicle is a target vehicle 1, the second status information may include status information of the target vehicle 1. As shown in Table 4, when the second vehicle is a target vehicle 2, a target vehicle 3, and a target vehicle 4, the second status information may include status information of the target vehicle 2, the target vehicle 3, and the target vehicle 4. The second status information is a subset of the first status information.

**Table 3**

| | |
|---|---|
| Second status information | Status information of a target vehicle 1 |

**Table 4**

| | |
|---|---|
| Second status information | Status information of a target vehicle 2 |
| | Status information of a target vehicle 3 |
| | Status information of a target vehicle 4 |

The "first task" in this embodiment of this application may be one or more tasks. This is not specifically limited in embodiments of this application. The second status information is associated with the first task. It may be understood that the second status information is a vehicle status required for the second vehicle that executes the first task. In other words, there is a mapping relationship between the first task and the second status information. The mapping relationship may be modified by using an interface, a configuration file, or an environment variable. This is not limited in embodiments of this application. For example, the first task is a WORK task. Generally, a state that needs to be met is shown in Table 4.1.

A healthy state indicates whether a vehicle can normally travel according to a path or an instruction delivered by a server, instead of being completely incapable of travelling. In a special scenario, for example, when a quantity of vehicles is insufficient or an urgent task exists, a constraint of the WORK task on the state may be lifted, that is, the WORK task can be received regardless of whether the healthy is true or false.

A value rule of each state can also be defined. For example, for travelable, in addition to an obstacle causing a travel failure, factors such as weather and a wet and slip road surface that cause a travel failure of a vehicle may further be considered. For healthy, a specific determining threshold may also be set, for example, control precision reduction and power reduction. For online, network stability may also be considered. If a network is unstable, even if the network is always in a connected state, it may be considered that a value of the online is false.

**Table 4.1**

| | | | | |
|---|---|---|---|---|
| online | manual | healthy | available | travelable |
| true | false | true | true | true |

In a possible implementation, the first task may be any one of a work task, a charging task, or a parking task. The work task may include a goods transportation task, a refueling service, a goods handling service, and the like. This is not specifically limited in embodiments of this application.

It should be noted that different types of first tasks correspond to different second status information. For example, when the first task is the work task, status parameters that are of one or more target vehicles and that are included in the second status information may be an online state, a healthy state, a task-receivable state, a travelable state, an uncharged state, or a remote control state. For another example, when the first task is the charging task or the parking task, status parameters that are of one or more target vehicles and that are included in the second status information may be an online state, a non-faulty state, a task-receivable state, a travelable state, an uncharged state, a manual control state, and a non-charging-task state.

For example, the first task is the work task. As shown in Table 5, an available state of a vehicle associated with the work task is an online state, a healthy state, a task-receivable state, a travelable state, an uncharged state, and a non-remote control state. First status information that is reported by a vehicle 1, a vehicle 2, and a vehicle 3 and that is received by the server 100 is shown in Table 6, and second status information selected by the server 100 from the first status information is shown in Table 7, that is, the status information of the vehicle 3.

**Table 5**

| | |
|---|---|
| Available state | An online state, a healthy state, a task-receivable state, a travelable state, an uncharged state, and a non-remote control state |

**Table 6**

| | |
|---|---|
| First status information | Status information of a vehicle 1 (an online state, a healthy state, a task-receivable state, a travelable state, an uncharged state, and a remote control state) |
| | Status information of a vehicle 2 (an offline state, a healthy state, a task-receivable state, a travelable state, an uncharged state, and a non-remote control state) |
| | Status information of a vehicle 3 (an online state, a healthy state, a task-receivable state, a travelable state, an uncharged state, and a non-remote control state) |

**Table 7**

| | |
|---|---|
| Second status information | Status information of a vehicle 3 (an online state, a healthy state, a task-receivable state, a travelable state, an uncharged state, and a non-remote control state) |

S303: The server 100 determines the second vehicle from the at least one first vehicle based on the second status information.

The "second vehicle" in this embodiment of this application may be one or more target vehicles. The "first task" may be one task, or may be a set of a plurality of tasks. This is not specifically limited in embodiments of this application. For example, the first task may be a charging task. For another example, the first task is a set of a plurality of work tasks.

A quantity of target vehicles corresponding to the second vehicle is related to the first task. For example, when the first task is a single task, the second vehicle may correspond to one target vehicle. When the first task is a plurality of tasks, the second vehicle may correspond to a plurality of target vehicles.

For example, when the first task is a set of four work tasks, the server 100 receives status information reported by 10 first vehicles, and determines, from the status information reported by the 10 first vehicles, second status information corresponding to the four work tasks. Further, the server 100 may determine, based on the second status information, four target vehicles for executing the first task.

In a possible implementation, before sending indication information to the second vehicle, the server 100 further needs to determine that the second vehicle is in an available state. The "available state" may be understood as a vehicle status required by the target vehicle that executes the first task, and is associated with the second status information, that is, all status information of the second vehicle corresponding to the second status information meets a status information requirement corresponding to the available state. Different types of first tasks correspond to different available states. For example, when the first task is a work task, the available state is an online state, a non-faulty state, a task-receivable state, a travelable state, an uncharged state, and a remote control state. For another example, when the first task is a charging task or a parking task, the available state is an online state, a non-faulty state, a task-receivable state, a travelable state, an uncharged state, a remote control state, and a non-charging-task state.

S304. The server 100 sends the indication information to the second vehicle, and the second vehicle receives the indication information.

The indication information indicates the second vehicle to execute the first task.

In a possible implementation, the indication information may further include control information corresponding to the first task, and then the second vehicle may execute the first task based on the control information. The control information may include path navigation information, work operation information, and the like. For example, when the first task is a goods handling task, control information corresponding to the first task includes path navigation information and goods loading and unloading operation information. For another example, when the first task is a charging task, control information corresponding to the first task includes path navigation information and charging control information (for example, a control operation of docking a charging connector).

S305: The second vehicle executes the first task.

For example, the first task is a charging task. The indication information delivered by the server 100 includes path navigation information, charging control information, and location information of a target charging pile. In this case, the second vehicle travels to a location of the target charging pile based on the path navigation information, controls a charging interface of the second vehicle to connect to a charging pile of the target charging pile.

In the embodiment shown in FIG. 3, the server 100 determines, based on the first status information associated with the at least one first vehicle and the status information associated with the first task, the second vehicle (namely, a target vehicle) for executing the first task. This can effectively implement appropriate vehicle task allocation, and effectively reduce a vehicle task conflict, so that vehicle tasks can be carried out smoothly.

For example, refer to FIG. 4. FIG. 4 shows a method for determining a visible state of a vehicle according to an embodiment of this application. The method may be applied to the server 100 or the vehicle shown in FIG. 1. The method includes the following steps.

S401: Obtain first information.

The first information includes at least one of the following: a charging state and a healthy state of a vehicle, and predicted work efficiency of executing a first task by the vehicle. The predicted work efficiency may be determined by the server 100 or the vehicle based on a preset algorithm and a current vehicle status. For example, the first task is freight transportation. If a distance between a vehicle 1 and a freight destination exceeds a preset threshold, predicted work efficiency of the vehicle 1 is low.

S402: Determine, based on the first information, whether the vehicle is in a visible state.

It can be learned from the foregoing description that the visible state indicates that the vehicle is in an offline state for a third-party server. In this case, the vehicle cannot receive a task from the third-party server.

It should be understood that, because the first information corresponds to different parameters, implementations of determining whether the vehicle is in the visible state are different.

Example 1: When the first information includes a charging state of the vehicle, if it is determined that the vehicle is in the charging state, it is determined that the vehicle is in an invisible state. If it is determined that the vehicle is in an uncharged state, it is determined that the vehicle is in the visible state.

Example 2: When the first information includes a charging state and a healthy state of the vehicle, if it is determined that the vehicle is in the healthy state and the charging state, it is determined that the vehicle is in an invisible state. If it is determined that the vehicle is in an uncharged state but is in an unhealthy state, it is determined that the vehicle is in an invisible state. If it is determined that the vehicle is in the uncharged state and is in the healthy state, it is determined that the vehicle is in the visible state.

Example 3: The first information includes a charging state and a healthy state of the vehicle, and predicted work efficiency of executing the first task by the vehicle. If it is determined that the vehicle is in the healthy state and an uncharged state, and the predicted work efficiency of executing the first task by the vehicle is less than a preset value, it is determined that the vehicle is in an invisible state. If it is determined that the vehicle is in the healthy state and an uncharged state, and the predicted work efficiency of executing the first task by the vehicle is greater than a preset value, it is determined that the vehicle is in the visible state. If it is determined that the vehicle is in the healthy state and the charging state, and the predicted work efficiency of executing the first task by the vehicle is greater than a preset value, it is determined that the vehicle is in an invisible state. If it is determined that the vehicle is in a fault state and an uncharged state, and the predicted work efficiency of executing the first task by the vehicle is greater than a preset value, it is determined that the vehicle is in an invisible state.

In the embodiment shown in FIG. 4, the server 100 or the vehicle may determine, based on status information of the vehicle and or the predicted work efficiency of executing the first task by the vehicle, whether the vehicle is in a visible state, and further determine whether the vehicle receives a task of a third party, so that vehicle task allocation is more appropriate, and a case in which task execution fails due to a task conflict of the vehicle is effectively reduced.

It should be noted that before determining a second vehicle based on second status information associated with the first task, the server 100 needs to determine the first task. There are a plurality of implementations of determining the first task. The implementations include but are not limited to the following manners.

A manner 1: The server 100 determines the first task based on a first resource required by a first vehicle and availability of the first resource. The first resource includes at least one of the following: a charging pile location, a maintenance location, a parking location, and a work location. A production resource includes any one of a charging pile, parking space, a maintenance device, or a diagnosis device.

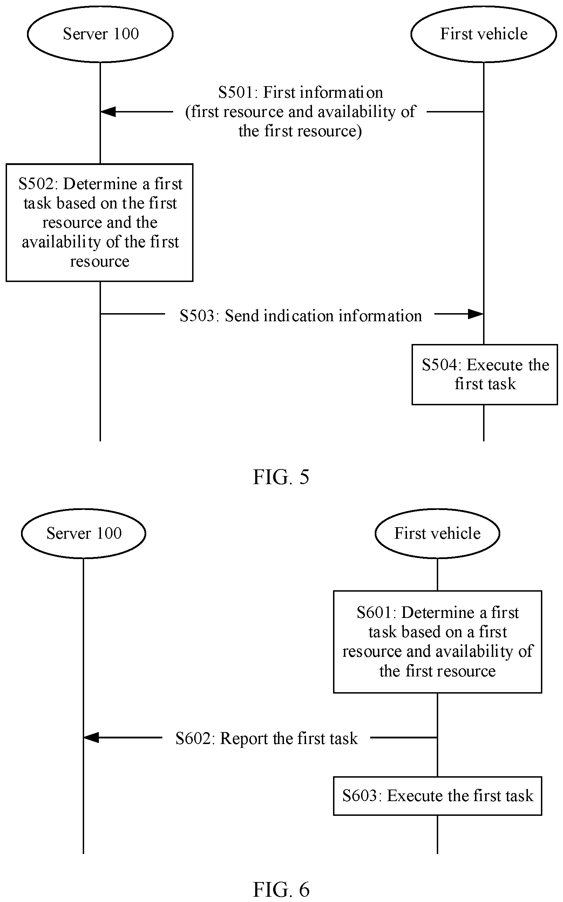

For example, refer to FIG. 5. FIG. 5 shows a vehicle task determining method according to an embodiment of this application. The method includes the following steps.

S501: The first vehicle sends first information to the server 100, and the server 100 receives the first information.

The first information includes a first resource required by the first vehicle and availability of the first resource. The first resource may include at least one of the following: a charging pile location, a maintenance location, a parking location, and a work location. The "charging pile location" may be understood as a charging pile resource corresponding to the location. The "maintenance location" may be understood as a maintenance device and a diagnosis device corresponding to the location. The "parking location" may be understood as parking space corresponding to the location. The "work location" may be understood as a work area and a tool corresponding to the location. For example, the first resource may be a charging pile location, a maintenance location, a parking location, and a work location. For another example, the first resource may be a charging pile location and a parking location, or may be a maintenance location and a parking location, or may further be a work location and a parking location. For another example, the first resource may be a charging pile location, a maintenance location, and a parking location.

S502: The server 100 determines a first task based on the first resource and the availability of the first resource.

In a possible implementation, the server 100 detects that a vehicle needs the first resource, the availability of the first resource is queried. If the first resource is available, a related vehicle task is generated. If the first resource is unavailable, a task is not triggered. The server 100 may monitor usage of the first resource by the vehicle, and determine the first resource required by the vehicle. The server 100 may determine the availability of the first resource by querying map information corresponding to the first resource. For example, when a remaining battery level of the first vehicle is less than 20%, a charging pile that is at a preset distance from the first vehicle is queried. If a current location of the first vehicle corresponds to a charging pile location, the first resource is the charging pile location. If there is no charging pile at a current location of the first vehicle, the first resource is a charging pile location and a parking location.

For another example, when the first resource is a parking location, the server 100 may obtain parking space information by querying map information. When determining that available parking space exists, the server 100 determines a target parking location for a current vehicle, and triggers a parking task of the current vehicle.

In the manner 1, the server 100 automatically triggers a related task by monitoring a resource requirement of the first vehicle and availability of the related resource, so that the vehicle can supplement a resource in time, and further, the first vehicle has sufficient resources to execute another work task.

A manner 2: The first vehicle determines the first task based on a first resource required by the first vehicle and availability of the first resource, and reports the first task to the server 100. The first resource includes at least one of the following: a charging pile location, a maintenance location, a parking location, and a work location. A production resource includes any one of a charging pile, parking space, a maintenance device, or a diagnosis device.

For example, refer to FIG. 6. FIG. 6 shows another vehicle task determining method according to an embodiment of this application. The method includes the following steps.

S601: The first vehicle determines the first task based on a first resource required by the first vehicle and availability of the first resource.

The first resource includes at least one of the following: a charging pile location, a maintenance location, a parking location, and a work location. The "charging pile location" may be understood as a charging pile resource corresponding to the location. The "maintenance location" may be understood as a maintenance device and a diagnosis device corresponding to the location. The "parking location" may be understood as parking space corresponding to the location. The "work location" may be understood as a work area and a tool corresponding to the location. For example, the first resource may be a charging pile location, a maintenance location, a parking location, and a work location. For another example, the first resource may be a charging pile location and a parking location, or may be a maintenance location and a parking location, or may further be a work location and a parking location. For another example, the first resource may be a charging pile location, a maintenance location, and a parking location.

Related descriptions of S601 are similar to those of S502, provided that the server 100 needs to be replaced with the first vehicle. Details are not described herein again.

S602: The first vehicle reports the first task to the server 100.

S603: The first vehicle executes the first task.

In the manner 2, the first vehicle may automatically trigger a task based on a resource requirement of the first vehicle and availability of the related resource, and report the task to the server, so that the vehicle can supplement a resource in time, and further, the first vehicle has sufficient resources to execute another work task.

A manner 3: The server 100 may further receive a task from a third-party server, and determine the task as the first task.

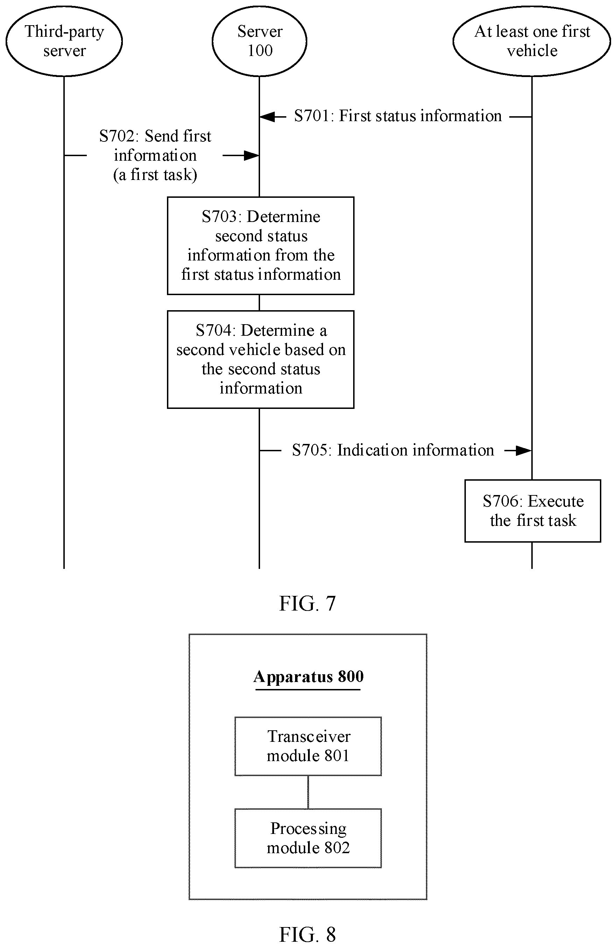

For example, refer to FIG. 7. FIG. 7 shows another vehicle task determining method according to an embodiment of this application. The method includes the following steps.

S701: At least one first vehicle reports first status information to the server 100, and the server 100 receives the first status information.

Related descriptions of S701 are similar to those of S301. Refer to the foregoing description. Details are not described herein again.

S702: A third-party server sends first information to the server 100, and the server 100 receives the first information. The first information indicates the first task.

The third-party server may be another task management system.

It should be noted that, before receiving the first information, the server 100 needs to determine that the at least one first vehicle is in a visible state, that is, an online state for the third-party server.

S703: Determine second status information based on the first status information. The second status information is associated with the first task.

In this embodiment of this application, the "second status information" may be understood as status information of a second vehicle (namely, one or more target vehicles) that executes the first task. The "first task" in this embodiment of this application may be one or more tasks. This is not specifically limited in embodiments of this application. The second status information is associated with the first task. It may be understood that the second status information is a vehicle status required for the second vehicle that executes the first task.

Related descriptions of S703 are similar to those of S302. Refer to the foregoing description. Details are not described herein again.

S704: Determine the second vehicle from the at least one first vehicle based on the second status information.

The "second vehicle" in this embodiment of this application may be one or more target vehicles. The "first task" may be one task, or may be a set of a plurality of tasks. This is not specifically limited in embodiments of this application. A quantity of target vehicles corresponding to the second vehicle is related to the first task. For example, when the first task is a single task, the second vehicle may correspond to one target vehicle. When the first task is a plurality of tasks, the second vehicle may correspond to a plurality of target vehicles.

Related descriptions of S704 are similar to those of S303. Refer to the foregoing description. Details are not described herein again.

S705: Send indication information to the second vehicle, and the second vehicle receives the indication information.

The indication information indicates the second vehicle to execute the first task. It should be understood that related descriptions of S705 are similar to those of S304. Refer to the foregoing description. Details are not described herein again.

S706: The second vehicle executes the first task.

It should be understood that related descriptions of S706 are similar to those of S305. Refer to the foregoing description. Details are not described herein again.

In the manner 3, the server 100 may receive a task of the third-party server, and determine, based on status information associated with the task and status information of the vehicle, a vehicle for executing the task. This can effectively reduce task management disorder in a management scenario of a multi-task management system, and effectively implement appropriate vehicle task allocation, so that vehicle tasks can be carried out smoothly.

FIG. 8 is a schematic diagram of a possible structure of the vehicle task management apparatus in the foregoing embodiments of this application. An apparatus 800 may be configured to implement the method in any one of the embodiments shown in FIG. 3 to FIG. 7.

For example, the apparatus 800 may include:
a transceiver module 801, configured to receive first status information, where the first status information is associated with at least one first vehicle; and
a processing module 802, configured to: determine second status information from the first status information, where the second status information is associated with a first task; and determine a second vehicle from the at least one first vehicle based on the second status information.

The transceiver module 801 is further configured to send indication information to the second vehicle, where the indication information indicates the second vehicle to execute the first task.

In a possible implementation, the first status information or the second status information includes at least one of the following: an online state, a healthy state, a task-receivable state, a travelable state, a charging state, a charging-task state, a remote control state, and a visible state of a vehicle.

In a possible implementation, the first task is determined based on a first resource required by the first vehicle and availability of the first resource. The first resource includes at least one of the following: a charging pile location, a maintenance location, a parking location, and a work location.

In a possible implementation, the first task is a task input from a third party or a task reported by the second vehicle. The third party may be a third-party server.

In a possible implementation, the first task is a charging task, a parking task, or a work task.

In a possible implementation, before the transceiver module 801 sends the indication information to the second vehicle, the processing module 802 is further configured to determine that the second vehicle is in an available state.

In a possible implementation, the transceiver module 801 is further configured to receive reported information, where the reported information is information reported after the second vehicle completes execution of the first task.

It should be understood that, for detailed descriptions and beneficial effects of implementations of the apparatus 800, refer to related content of the embodiment shown in FIG. 4 or FIG. 6. Details are not described herein again.

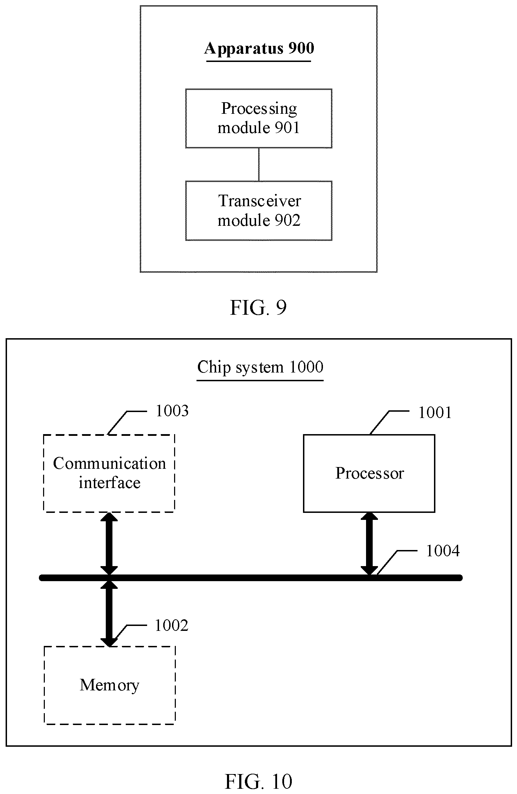

FIG. 9 is a schematic diagram of another possible structure of the vehicle task management apparatus in the foregoing embodiments of this application. An apparatus 900 may be configured to implement functions of the vehicle shown in FIG. 1 or FIG. 2.

For example, the apparatus 900 may include:
a transceiver module 901, configured to: send first status information to a server, so that the server determines second status information from the first status information; and receive indication information from the server, where the indication information indicates a second vehicle to execute a first task; and
a processing module 902, configured to execute the first task based on the indication information.

In a possible implementation, the first status information or the second status information includes at least one of the following:
an online state, a healthy state, a task-receivable state, a travelable state, a charging state, a remote control state, a charging-task state, and a visible state of a vehicle.

In a possible implementation, the first task is determined based on a first resource required by the first vehicle and availability of the first resource. The first resource includes at least one of the following: a charging pile location, a maintenance location, a parking location, and a work location.

In a possible implementation, the first task is a task input from a third party or a task reported by the second vehicle.

In a possible implementation, the first task is a charging task, a parking task, or a work task.

In a possible implementation, the transceiver module 901 is further configured to send reported information to the server, where the reported information is information reported after the second vehicle completes execution of the first task.

It should be understood that, for detailed descriptions and beneficial effects of implementations of the apparatus 900, refer to related content of embodiments shown in FIG. 3 to FIG. 7. Details are not described herein again.

An embodiment of this application further provides a vehicle. The vehicle may include a processor, and the processor is configured to perform the vehicle task management method in any one of embodiments shown in FIG. 3 to FIG. 7.

In a possible implementation, the vehicle further includes a memory, configured to store a computer program or instructions.

In a possible implementation, the vehicle further includes a transceiver, configured to receive or send information.

An embodiment of this application further provides a server. The server includes a processor. The processor is configured to perform a function of the server shown in FIG. 1 or FIG. 2, to implement the vehicle task management method provided in embodiments of this application.

In a possible implementation, the server further includes a memory, configured to store a computer program or instructions.

In a possible implementation, the server further includes a transceiver, configured to receive or send information.

In a possible implementation, the server is a single server or a server cluster including a plurality of sub-servers. When the server is a server cluster including a plurality of sub-servers, the plurality of sub-servers jointly perform functions of the server 100 shown in FIG. 1 or FIG. 2.

An embodiment of this application further provides a chip system. Refer to FIG. 10, a chip system 1000 includes at least one processor. When program instructions are executed in the at least one processor 1001, the vehicle task management method in any one of embodiments shown in FIG. 3 to FIG. 7 is implemented.

In a possible implementation, the chip system further includes a communication interface 1003, and the communication interface is configured to input or output information.

In a possible implementation, the chip system further includes a memory 1002. The memory 1002 is coupled to the processor through the communication interface 1003, and is configured to store the foregoing instructions, so that the processor reads, through the communication interface 1003, the instructions stored in the memory.

It should be understood that a connection medium among the processor 1001, the memory 1002, and the communication interface 1003 is not limited in embodiments of this application. In an embodiment of this application, in FIG. 10, the memory 1002, the processor 1001, and the communication interface 1003 are connected through a communication bus 1004. The bus is indicated by a bold line in FIG. 10. A connection manner between other components is merely an example for description, and is not a limitation. The bus may include an address bus, a data bus, a control bus, and the like. For ease of indication, only one bold line is used in FIG. 10. However, this does not indicate that there is only one bus, only one type of bus, or the like.

An embodiment of this application further provides a computer program product including instructions. When the computer program product runs on the foregoing apparatus, the vehicle task management method in any one of embodiments shown in FIG. 3 to FIG. 7 is performed.

An embodiment of this application provides a computer-readable storage medium. The computer-readable storage medium stores a computer program. When the computer program is run, the vehicle task management method in any one of embodiments shown in FIG. 3 to FIG. 7 is implemented.

The foregoing embodiments may be combined with each other to achieve different technical effects.

The foregoing descriptions about implementations allow a person skilled in the art to understand that, for the purpose of convenient and brief description, division of the foregoing functional modules is taken as an example for illustration. During actual application, the foregoing functions can be allocated to different modules and implemented according to a requirement, that is, an inner structure of an apparatus is divided into different functional modules to implement all or some of the functions described above.

In the several embodiments provided in this application, it should be understood that the disclosed apparatus and method may be implemented in other manners. The foregoing descriptions about implementations allow a person skilled in the art to understand that, for the purpose of convenient and brief description, division of the foregoing functional modules is taken as an example for illustration. During actual application, the foregoing functions can be allocated to different modules and implemented according to a requirement, that is, an inner structure of an apparatus is divided into different functional modules to implement all or some of the functions described above. In addition, the displayed or discussed mutual coupling or direct coupling or communication connection may be implemented through some interfaces, and the indirect coupling or communication connection of the apparatuses or units may be implemented in an electrical, a mechanical, or another form.

The units described as separate parts may or may not be physically separate, and parts displayed as units may be one or more physical units, may be located in one place, or may be distributed on different places. Some or all of the units may be selected based on actual requirements to achieve objectives of the solutions of embodiments.

In addition, function units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of this application essentially, or the part contributing to the conventional technology, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in embodiments of this application. The foregoing storage medium includes any medium that can store program code, like a USB flash drive, a removable hard disk, a ROM, a RAM, a magnetic disk, or an optical disc. The foregoing descriptions are merely specific implementations of embodiments of this application, but are not intended to limit the protection scope of embodiments of this application. Any variation or replacement within the technical scope disclosed in this application shall fall within the protection scope of embodiments of this application. Therefore, the protection scope of embodiments of this application shall be subject to a protection scope of the claims.

## Claims

1. A vehicle task management method, wherein the method comprises:
receiving first status information, wherein the first status information is associated with at least one first vehicle;
determining second status information from the first status information, wherein the second status information is associated with a first task;
determining a second vehicle from the at least one first vehicle based on the second status information; and
sending indication information to the second vehicle, wherein the indication information indicates the second vehicle to execute the first task.

2. The method according to claim 1, wherein the first status information or the second status information comprises at least one of the following:
an online state, a healthy state, a task-receivable state, a travelable state, a charging state, a remote control state, a charging-task state, and a visible state of a vehicle.

3. The method according to claim 1 or 2, wherein the first task is determined based on a first resource required by the first vehicle and availability of the first resource, and the first resource comprises at least one of the following: a charging pile location, a maintenance location, a parking location, and a work location.

4. The method according to claim 1 or 2, wherein the first task is a task input from a third party or a task reported by the second vehicle.

5. The method according to any one of claims 1 to 4, wherein the first task is a charging task, a parking task, or a work task.

6. The method according to any one of claims 1 to 5, wherein before the sending indication information to the second vehicle, the method further comprises:
determining that the second vehicle is in an available state.

7. The method according to any one of claims 1 to 6, wherein the method further comprises:
receiving reported information, wherein the reported information is information reported after the second vehicle completes execution of the first task.

8. A vehicle task management method, applied to a second vehicle in at least one first vehicle, wherein the at least one first vehicle is associated with first status information, the second vehicle is associated with second status information, and the second status information is associated with a first task; and the method comprises:
sending the first status information to a server, so that the server determines the second status information from the first status information;
receiving indication information from the server, wherein the indication information indicates the second vehicle to execute the first task; and
executing the first task based on the indication information.

9. The method according to claim 8, wherein the first status information or the second status information comprises at least one of the following:
an online state, a healthy state, a task-receivable state, a travelable state, a charging state, a remote control state, a charging-task state, and a visible state of a vehicle.

10. The method according to claim 8 or 9, wherein the first task is determined based on a first resource required by the first vehicle and availability of the first resource, and the first resource comprises at least one of the following: a charging pile location, a maintenance location, a parking location, and a work location.

11. The method according to claim 8 or 9, wherein the first task is a task input from a third party or a task reported by the second vehicle.

12. The method according to any one of claims 8 to 11, wherein the first task is a charging task, a parking task, or a work task.

13. The method according to any one of claims 8 to 12, wherein the method further comprises:
sending reported information to the server, wherein the reported information is information reported after the second vehicle completes execution of the first task.

14. A vehicle task management system, comprising:
a server, configured to: receive first status information, wherein the first status information is associated with at least one first vehicle, determine second status information from the first status information, wherein the second status information is associated with a first task, determine a second vehicle based on the second status information, and send indication information to the second vehicle, wherein the indication information indicates the second vehicle to execute the first task; and
the second vehicle, configured to: send the first status information to the server, receive the indication information, and execute the first task based on the indication information.

15. The system according to claim 14, wherein the system further comprises a third-party server;
the third-party server is configured to send the first task to the server; and
the server is further configured to receive the first task.

16. A vehicle task management apparatus, comprising:
a transceiver module, configured to receive first status information, wherein the first status information is associated with at least one first vehicle; and
a processing module, configured to: determine second status information from the first status information, wherein the second status information is associated with a first task, and determine a second vehicle from the at least one first vehicle based on the second status information, wherein
the transceiver module is further configured to send indication information to the second vehicle, wherein the indication information indicates the second vehicle to execute the first task.

17. The apparatus according to claim 16, wherein the first status information or the second status information comprises at least one of the following:
an online state, a healthy state, a task-receivable state, a travelable state, a charging state, a remote control state, a charging-task state, and a visible state of a vehicle.

18. The apparatus according to claim 16 or 17, wherein the first task is determined based on a first resource required by the first vehicle and availability of the first resource, and the first resource comprises at least one of the following: a charging pile location, a maintenance location, a parking location, and a work location.

19. The apparatus according to claim 16 or 17, wherein the first task is a task input from a third party or a task reported by the second vehicle.

20. The apparatus according to any one of claims 16 to 19, wherein the first task is a charging task, a parking task, or a work task.

21. The apparatus according to any one of claims 16 to 20, wherein before the transceiver module sends the indication information to the second vehicle, the processing module is further configured to:
determine that the second vehicle is in an available state.

22. The apparatus according to any one of claims 16 to 21, wherein the transceiver module is further configured to:
receive reported information, wherein the reported information is information reported after the second vehicle completes execution of the first task.

23. A vehicle task management apparatus, comprising:
a transceiver module, configured to: send first status information to a server, so that the server determines second status information from the first status information, and receive indication information from the server, wherein the indication information indicates a second vehicle to execute a first task; and
a processing module, configured to execute the first task based on the indication information.

24. The apparatus according to claim 23, wherein the first status information or the second status information comprises at least one of the following:
an online state, a healthy state, a task-receivable state, a travelable state, a charging state, a remote control state, a charging-task state, and a visible state of a vehicle.

25. The apparatus according to claim 23 or 24, wherein the first task is determined based on a first resource required by a first vehicle and availability of the first resource, and the first resource comprises at least one of the following: a charging pile location, a maintenance location, a parking location, and a work location.

26. The apparatus according to claim 23 or 24, wherein the first task is a task input from a third party or a task reported by the second vehicle.

27. The apparatus according to any one of claims 23 to 26, wherein the first task is a charging task, a parking task, or a work task.

28. The apparatus according to any one of claims 23 to 27, wherein the transceiver module is further configured to:
send reported information to the server, wherein the reported information is information reported after the second vehicle completes execution of the first task.

29. A server, comprising a processor, wherein the processor is configured to perform the method according to any one of claims 1 to 7.

30. A vehicle, comprising a processor, wherein the processor is configured to perform the method according to any one of claims 8 to 13.

31. A computer-readable storage medium, wherein the computer-readable storage medium stores a computer program, and when the computer program is run, the method according to any one of claims 1 to 7 or claims 8 to 13 is implemented.

32. A computer program product, comprising instructions, wherein when the instructions run on a computer or a processor, the computer or the processor is enabled to implement the method according to any one of claims 1 to 7 or claims 8 to 13.

33. A chip, comprising a processor, wherein the processor is configured to invoke a computer program or computer instructions stored in a memory, to implement the method according to any one of claims 1 to 7 or claims 8 to 13.
